# EUROPÄISCHE PATENTSCHRIFT

(11) **EP 1 714 869 B1**
(45) Veröffentlichungstag und Bekanntmachung des Hinweises auf die Patenterteilung: **24.12.2008**
(21) Anmeldenummer: 06006391.4
(22) Anmeldetag: 28.03.2006
(51) Int. Cl.: B64C 23/06, B64C 27/467, B64C 21/02

(54) **Auftriebsfläche mit verbessertem Ablöseverhalten bei stark veränderlichem Anstellwinkel**
Lifting surface with improved separation behaviour under strongly variable angle of incidence
Surface de sustentation avec comportement de séparation amélioré sous angle d'incidence fortement variable

(30) Priorität: 21.04.2005 DE 102005018427
(43) Veröffentlichungstag der Anmeldung: 25.10.2006
(73) Patentinhaber: Deutsches Zentrum für Luft- und Raumfahrt e.V., 51147 Köln (DE)
(72) Erfinder: Dr.-Ing. Dietz, Guido, 50678 Köln (DE); Dipl.-Phys. Mai, Holger, 37085 Göttingen (DE); Dr. rer. nat. Geißler, Wolfgang, 28359 Bremen (DE)
(74) Vertreter: Rehberg Hüppe + Partner

(56) Entgegenhaltungen:
- WO-A-98/22711
- DE-C- 605 663
- US-A- 5 755 408
- US-B1- 6 318 677
- US-B1- 6 431 498

## Beschreibung

Die Erfindung bezieht sich auf eine Auftriebsfläche mit sich dynamisch änderndem Anstellwinkel zu einer Anströmung, insbesondere einen Drehflügel, mit Vorrichtungen im Bereich einer Vorderkante der Auftriebsfläche, um ihr Ablöseverhalten bei Erhöhung ihres Anstellwinkels zu verbessern.

Ein Beispiel für einen Drehflügel ist ein Rotorblatt eines Hubschraubers. Neben einem Drehflügel kann die Auftriebsfläche mit variierendem Anstellwinkel beispielsweise auch bei einem Schiffsstabilisator vorgesehen sein, bei dem die Auftriebsfläche als Stabilisierungsflosse verwendet wird, deren Anstellwinkel schnell verändert wird, um das Rollen eines Schiffes zu unterbinden.

### STAND DER TECHNIK

Bei Hubschraubern im Vorwärtsflug treten stark unterschiedliche Anströmgeschwindigkeiten auf, denen ein Rotorblatt während einer Umdrehung des Rotors ausgesetzt ist. Am vorlaufenden Rotorblatt addieren sich eine Geschwindigkeit einer Vorwärtsbewegung des Hubschraubers und eine lokale Rotationsgeschwindigkeit des betrachteten Abschnitts des Rotorblatts und führen insbesondere im Bereich des freien Endes des Rotorblatts zu Strömungsgeschwindigkeiten nahe der Schallgeschwindigkeit. Das rücklaufende Rotorblatt erfährt die Differenz der lokalen Rotationsgeschwindigkeit und der Vorwärtsgeschwindigkeit des Hubschraubers und die Anströmgeschwindigkeit ist entsprechend um die doppelte lokale Rotationsgeschwindigkeit kleiner. Um den Hubschrauber in der Horizontalen zu halten, muss mit dem rücklaufenden Rotorblatt dennoch ein vergleichbarer Auftrieb erzeugt werden, wie mit dem vorlaufenden. Dies wird mit Hilfe einer zyklischen Anstellwinkelverstellung erreicht, die für das rücklaufende Rotorblatt kurzzeitig einen sehr hohen Anstellwinkel realisiert. Bei dieser dynamischen Erhöhung des Anstellwinkels entsteht das Problem einer dynamischen Strömungsablösung, Dynamic Stall genannt, die den Auftrieb zusammenbrechen lässt. Bei der dynamischen Strömungsablösung an einem kurzzeitig hoch angestellten Rotorblatt schwimmt ein an der Profilvorderkante gebildeter, so genannter Dynamic-Stall-Wirbel von dem Rotorblatt ab. Vor seinem Abschwimmen erzeugt der Dynamic-Stall-Wirbel kurzzeitig einen zusätzlichen Auftrieb; ferner bewirkt er ein großes negatives Nickmoment auf das Rotorblatt, welches eine strukturelle Belastung bedeutet, die durch eine entsprechende Versteifung des Rotorblatts kompensiert werden muss. Die Folge ist ein höheres Strukturgewicht. Der hohe Anstellwinkel des Rotorblatts und die damit verbundene Strömungsablösung bedingen ferner einen erhöhten Strömungswiderstand des Rotorblatts. Zur Abminderung der mit der dynamischen Strömungsablösung verbundenen Probleme sind verschiedene Maßnahmen bekannt. Hierbei handelt es sich überwiegend um aktive Maßnahmen, z. B. in Form von dynamisch bewegten Klappen im Bereich der Profilvorderkante oder -hinterkante des Rotorblatts, mit denen das Profil des Rotorblatts für seinen Rücklauf vorübergehend verändert wird, um den Auftrieb zu erhöhen, die jedoch nur mit großem mechanischem Aufwand in das Rotorblatt zu integrieren sind und für die Aktuatoren beispielsweise in Form von aufwändigen Piezoaktuatoren in dem Rotorblatt vorgesehen werden müssen. Dieser Aufwand geht mit einem unerwünscht hohen Strukturgewicht einher. Zudem muss bei aktiven Maßnahmen stets eine Ausfallsicherheit gewährleistet werden, was in zusätzlichem Systemaufwand resultiert.

Besonders groß ist die Gefahr einer Strömungsablösung an einem rücklaufenden Rotorblatt, wenn sein Profil superkritisch ausgelegt ist, um es für den schallnahen Geschwindigkeitsbereich der Anströmung des vorlaufenden Rotorblatts zu optimieren.

Ähnliche Probleme mit einer dynamischen Strömungsablösung wie bei einem Rotorblatt eines Hubschraubers treten an Stabilisierungsflossen von Schiffen auf. Hier werden Auftriebsflächen verwendet, deren Anstellwinkel schnell verändert werden müssen, um das Rollen des jeweiligen Schiffs zu unterbinden. Um einen ausreichend großen Effekt zu erzielen, müssen die Stabilisierungsflossen entweder sehr hoch angestellt werden oder sehr groß sein. Die Größe ist jedoch durch die zur Verfügung stehenden Stellkräfte und den Strömungswiderstand unter Wasser beschränkt; der mögliche Anstellwinkel hingegen durch die Gefahr der Strömungsablösung.

Um die Strömungsablösung von Auftriebsflächen zu vermeiden, ist es beispielsweise aus der US 4,354,648 bekannt, spezielle passive Wirbelgeneratoren auf den Saugseiten von Auftriebsflächen vorzusehen. Diese Wirbelgeneratoren wirken jedoch bei allen vorgesehenen Betriebszuständen der bekannten Auftriebsflächen.

Eine Auftriebsfläche in Form einer Tragfläche eines Flugzeugs ist aus der US 6,431,498 B1 bekannt. Hier ist die Profillänge der Auftriebsfläche in der Strömungsrichtung im Bereich der Profilvorderkante der Auftriebsfläche quer zu der Strömungsrichtung variiert, ohne dabei die Profilhöhe zu verändern. Die derart gebildeten, längs der Profilvorderkante seitlich beabstandeten Vorsprünge erzeugen eine abwechselnd vorwärts und rückwärts gerichtete Neigung der Profilvorderkante relativ zu der Anströmung, wobei die Übergänge zwischen diesen wechselnden Neigungen geglättet, d.h. abgerundet sind. Diese makroskopische Profilvariation soll seitliche Luftströmungen entlang der Vorderkante der Auftriebsfläche erzeugen und dadurch die Erzeugung von hohen Drücken im Bereich des Staupunkts der Auftriebsfläche verhindern. Weiterhin sollen Wirbel in Strömungsrichtung nahe der Profilvorderkante erzeugt werden. Als Wirbelgeneratoren im engeren Sinne sind die Vorsprünge der Vorrichtungen der bekannten Auftriebsfläche allerdings allein deshalb nicht anzusehen, weil sie in ihrem Bereich selbst die Profilvorderkante der Auftriebsfläche ausbilden und so nicht von dem umströmten Profil der Auftriebsfläche abstehen.

Aus der US 6,813,677 B1 ist eine weitere Auftriebsfläche in Form einer Tragfläche eines Flugzeugs bekannt. Hier sind an der Profilvorderkante der Auftriebsfläche einzelne spitz vorstehende Elemente vorgesehen, an deren Seitenkante lokale Längswirbel entstehen, die über die Saugseite der Auftrittsfläche hinweg laufen. Hierdurch soll hochenergetische Luftströmung mit der langsameren Luft innerhalb der Grenzschicht gemischt werden, um dadurch die Grenzschichtablösung längs des Flügels zu reduzieren.

Aus der WO 98/22711 ist eine Auftriebsfläche in Form eines Rotorblatts einer Windturbine bekannt. Im Bereich einer Profilvorderkante der Auftriebsfläche in oder nahe an deren Staupunkt sind passive Wirbelgeneratoren vorgesehen, um Stall-Schwingungen zu dämpfen oder vollständig zu verhindern. Die Wirbelgeneratoren sind über die Spannweite der Auftriebsfläche verteilt und jeweils in Spannweitenrichtung gestreckt ausgebildet. Die Anzahl der Wirbelgeneratoren kann 2 bis 10 betragen, die jeweils eine Länge von 1 bis 5 % der Spannweite aufweisen und mit Zwischenräumen von 1 bis 15 % der Spannweite in einem Bereich angeordnet sind, der sich in einem Abstand von 1 bis 20 % der Spannweite von der Spitze des Rotorblatts zu dem Zentrum der Windturbine hin erstreckt. Die Wirbelgeneratoren können von dreieckigem Querschnitt sein, wobei die Kantenlänge des dreieckigen Querschnitts 10 mm betragen kann.

### AUFGABE DER ERFINDUNG

Der Erfindung liegt die Aufgabe zugrunde, eine Auftriebsfläche mit sich dynamisch änderndem Anstellwinkel aufzuzeigen, die, obwohl nur eine passive Vorrichtung vorgesehen ist, dass Ablöseverhalten bei erhöhtem Anstellwinkel verbessert, ohne die Strömungseigenschaften der Auftriebsfläche bei niedrigen Anstellwinkeln maßgeblich negativ zu beeinflussen.

### LÖSUNG

Die Aufgabe der Erfindung wird durch eine Auftriebsfläche mit den Merkmalen des unabhängigen Patentanspruchs 1 gelöst. Bevorzugte Ausführungsformen der Auftriebsfläche sind in den abhängigen Ansprüchen 2 bis 6 beschrieben. Patentanspruch 7 betrifft einen Drehflügler mit mindestens einer umlaufenden Auftriebsfläche nach einem der Ansprüche 1 bis 6; Patentanspruch 8 betrifft einen Schiffsstabilisator mit einer Auftriebsfläche nach einem der Ansprüche 1 bis 6 als aktiv angesteuerte Stabilisierungsflosse; und Patentanspruch 9 betrifft eine Windkraftanlage mit einer Auftriebsfläche nach einem der Ansprüche 1 bis 6 als Rotorblatt mit veränderlichem Anstellwinkel.

### BESCHREIBUNG DER ERFINDUNG

Bei der neuen Auftriebsfläche umfassen die Vorrichtungen im Bereich ihrer Profilvorderkante mindestens einen passiven Wirbelgenerator, der sich bei einem niedrigen Anstellwinkel an oder nahe dem Staupunkt der Auftriebsfläche bei diesem Anstellwinkel befindet. Der Wirbelgenerator wird so nicht oder nur sehr langsam angeströmt und ist deshalb bei dem niedrigen Anstellwinkel als Wirbelgenerator funktionslos. Erst mit zunehmendem Anstellwinkel tritt der Wirbelgenerator aus einer Grenzschicht einer beschleunigten Strömung auf der Saugseite der Auftriebsfläche heraus. Er wird so zunehmend stärker angeströmt und tritt in der Folge bei höheren Anstellwinkeln als Wirbelgenerator in Funktion. Indem der Wirbelgenerator mit höheren Anstellwinkeln lokale Längswirbel erzeugt, wirkt er der Ausbildung des Dynamic-Stall-Wirbels entgegen, so dass der auf die Auftriebserhöhung durch den Dynamic-Stall-Wirbel folgende Zusammenbruch des Auftriebs verhindert oder zumindest verzögert bzw. verringert wird. Das unerwünschte Nickmoment auf die dynamisch hoch angestellte Auftriebsfläche wird reduziert. Der Wirbelgenerator beeinträchtigt aber nicht gleichzeitig die Strömungseigenschaften der Auftriebsfläche bei niedrigeren Anstellwinkeln, weil er bei diesen im Bereich des Staupunkts der Auftriebsfläche "verborgen" ist. Erprobungen der neuen Auftriebsfläche haben belegt, dass sie verglichen mit einer entsprechenden Auftriebsfläche ohne den Wirbelgenerator einen höheren Auftrieb bei geringerem Betrag des Nickmoments und einen niedrigeren Strömungswiderstand bei höheren Anstellwinkeln aufweist, während der Wirbelgenerator an der Profilvorderkante nahezu keine Auswirkung bei geringeren Anstellwinkeln hat. Die Strömung liegt auch bei Anstellwinkeln noch an der Antriebsfläche an, bei denen ohne den Wirbelgenerator bereits eine vollständige Strömungsablösung gegeben wäre. D. h., die neue Auftriebsfläche kann bei Bedarf zur Erzeugung von bezogen auf ihre Anströmgeschwindigkeit sehr großem Auftrieb sehr hoch angestellt werden, ohne dass dabei die Gefahr einer Strömungsablösung auftritt. Das ganze wird ohne aufwändige Mechanik oder irgendwelche bewegten Teile erreicht.

Die Vorrichtungen in dem Bereich der Profilvorderkante der neuen Auftriebsfläche weisen eine Vielzahl von passiven Wirbelgeneratoren auf, die längs der Profilvorderkante der Antriebsfläche angeordnet sind. Vorzugsweise sind die Wirbelgeneratoren über die gesamte Profilvorderkante der Auftriebsfläche verteilt. Sie sind so dicht anzuordnen, dass die von ihnen erzeugten Wirbel die Strömung auf der Saugseite der Auftriebsfläche über weite spannweitige Bereiche erfassen.

Die Wirbelgeneratoren an der neuen Auftriebsfläche können unterschiedliche Formen aufweisen. Sie können beispielsweise zylinder-, halbkugel-, prismen-, kegel-, quader- oder kalottenförmig sein.

Die Höhe der Wirbelgeneratoren ist so zu wählen, dass sie bei den höheren Anstellwinkeln, bei denen die Gefahr der Strömungsablösung besteht, aus der Grenzschicht der beschleunigten Strömung auf der Saugseite der Auftriebsfläche in die freie Strömung heraus ragen. Dies wird typischerweise mit einer Höhe der Wirbelgeneratoren zwischen 0,1 % und 5 % einer lokalen Sehnenlänge der Auftriebsfläche erreicht. Die lokale Sehnenlänge ist die Sehnenlänge der Auftriebsfläche im spannweitigen Bereich der betrachteten Wirbelgeneratoren. Typischerweise beträgt die Höhe der Wirbelgeneratoren nicht mehr als 3 % der lokalen Sehnenlänge der Auftriebsfläche. Vorzugsweise liegt der Maximalwert der Höhe der Wirbelgeneratoren bei 1 % der lokalen Sehnenlänge der Auftriebsfläche.

Die Wirbelgeneratoren der neuen Auftriebsfläche sind typischerweise bis zu einem Anstellwinkel von mindestens 10° zu der Anströmung der Auftriebsfläche weitgehend funktionslos. Bei deutlich darüber hinausgehenden Anstellwinkeln wirken sie sich in der beschriebenen positiven Weise auf die Umströmung der Auftriebsfläche aus.

Die Wirbelgeneratoren der neuen Auftriebsfläche sind typischerweise in einem Entfernungsbereich von 0% bis 10% der lokalen Sehnenlänge von der geometrischen Profilvorderkante der Auftriebsfläche angeordnet. Sie können dabei auch auf der geometrischen Profilunterseite liegen, wenn sie bei hoch angestellter Auftriebsfläche dennoch auf die Saugseite der Auftriebsfläche gelangen.

Die neue Auftriebsfläche ist dann besonders vorteilhaft, wenn sie ein superkritisches Profil aufweist, das also für einen schallnahen Geschwindigkeitsbereich der Anströmung ausgelegt ist, und das dank der Wirbelgeneratoren dennoch bei hohem Anstellwinkel und langsamer Anströmung nicht unter starken Problemen einer Strömungsablösung und unter Problemen durch das Abschwimmen des so genannten Dynamic-Stall-Wirbels leidet.

Eine Hauptanwendung wird die neue Auftriebsfläche als Drehflügel bei einem Drehflügler insbesondere als Rotorblatt bei einem Hubschrauber finden. Wie eingangs angedeutet, kann sie aber auch beispielsweise als aktiv angesteuerte Stabilisierungsflosse eines Schiffsstabilisators dienen. Eine weitere vorteilhafte Anwendungsmöglichkeit der Erfindung sind Windkraftanlagen. Hier kann die Auftriebsfläche als Rotorblatt zum Einsatz kommen, wodurch insbesondere bei einem Rotorblatt mit veränderlichem Anstellwinkel, wenn große Anstellwinkel eingestellt werden, die Gefahr einer Strömungsablösung erheblich reduziert wird, ohne den Strömungswiderstand des Rotorblatts bei niedrigeren Anstellwinkeln zu beeinträchtigen.

### KURZBESCHREIBUNG DER FIGUREN

Im Folgenden wird die Erfindung anhand eines in den Figuren dargestellten bevorzugten Ausführungsbeispiels weiter erläutert und beschrieben.
- **Fig. 1**: zeigt einen Querschnitt durch eine Auftriebsfläche, die unter einem Anstellwinkel von null Grad gegenüber einer horizontalen Anströmung ausgerichtet ist.
- **Fig. 2**: zeigt die Anströmfläche gemäß Fig. 1, die hier unter einem kleinen Anstellwinkel gegenüber der horizontalen Anströmung ausgerichtet ist.
- **Fig. 3**: zeigt die Auftriebsfläche gemäß den Figuren 1 und 2 unter einem hohen Anstellwinkel zu der horizontal verlaufenden Anströmung.
- **Fig. 4**: zeigt eine Draufsicht auf die Profilvorderkante der Auftriebsfläche gemäß den Figuren 1 bis 3.
- **Fig. 5**: zeigt einen Verlauf des momentanen Auftriebsbeiwerts aufgetragen über dem momentanen Anstellwinkel der Auftriebsfläche gemäß den Figuren 1 bis 4 für einen Deep-Stall-Fall.
- **Fig. 6**: zeigt den Verlauf des momentanen Nickmomentenbeiwerts aufgetragen über dem momentanen Anstellwinkel der Auftriebsfläche gemäß den Figuren 1 bis 4 für dieselben Anströmbedingungen wie in dem Fall gemäß Fig. 5.

### FIGURENBESCHREIBUNG

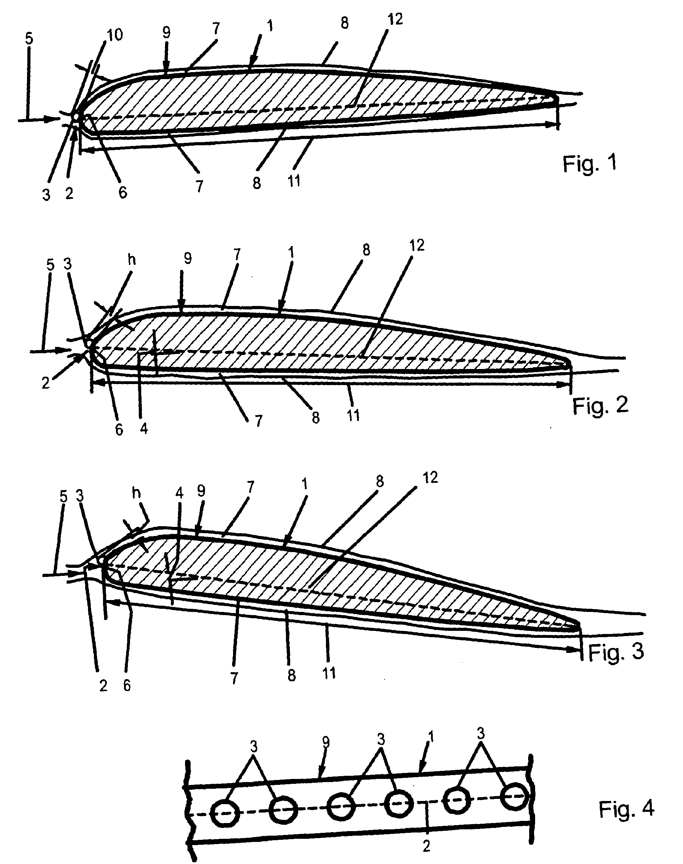

Die in den **Fig. 1 bis 4** dargestellte Auftriebsfläche 1 kann beispielsweise ein Rotorblatt eines Hubschraubers sein. Sie weist eine Profilvorderkante 2 auf, an der eine Reihe von halbkugelförmigen Wirbelgeneratoren 3 angeordnet ist. Die Funktion der Wirbelgeneratoren 3 hängt von einem Anstellwinkel 4 zwischen der Auftriebsfläche 1 und einer hier horizontal verlaufenden Anströmung 5 der Auftriebsfläche 1 ab. Gemäß Fig. 1 ist der Anstellwinkel nicht existent, d. h. 0°. Hierbei befindet sich der Wirbelgenerator 3 im Bereich eines Staupunkts 6 vor der Profilvorderkante 2. Er ist damit völlig in einen Bereich sehr niedriger Geschwindigkeiten nahe des Staupunkts 6 der Strömung 8 um die Auftriebsfläche 1 eingebettet. Mit dem von Fig. 1 über Fig. 2 zu Fig. 3 zunehmendem Anstellwinkel 4 erfährt der Wirbelgenerator 3 eine Anströmung und tritt aus einer Grenzschicht 7 der beschleunigten Strömung 8 an der Saugseite 9 der Auftriebsfläche 1 heraus und tritt so als Wirbelgenerator in Funktion. Eine Höhe 10 der Wirbelgeneratoren 3 beträgt hier etwa 0,3% einer Sehnenlänge 11 der Auftriebsfläche 1. Die Sehnenlänge 11 entspricht der Erstreckung der Auftriebsfläche 1 in ihrer Mittelebene 12 längs der Anströmung 5. Während jeder Wirbelgenerator 3 bei niedrigem Anstellwinkel die Umströmung der Auftriebsfläche 1 kaum beeinflusst, wird er bei höherem Anstellwinkel 4 durch die Erzeugung von Wirbeln aktiv, die das Ablösen der Strömung 8 von der Oberseite 9 der Auftriebsfläche 1 verhindern oder verzögern. Vor allem wird das Ausbilden eines energiereichen Dynamic-Stall-Wirbels von der Auftriebsfläche verhindert oder zumindest verzögert, wenn der Anstellwinkel 4 der Auftriebsfläche 1 insbesondere schnell vergrößert wird.

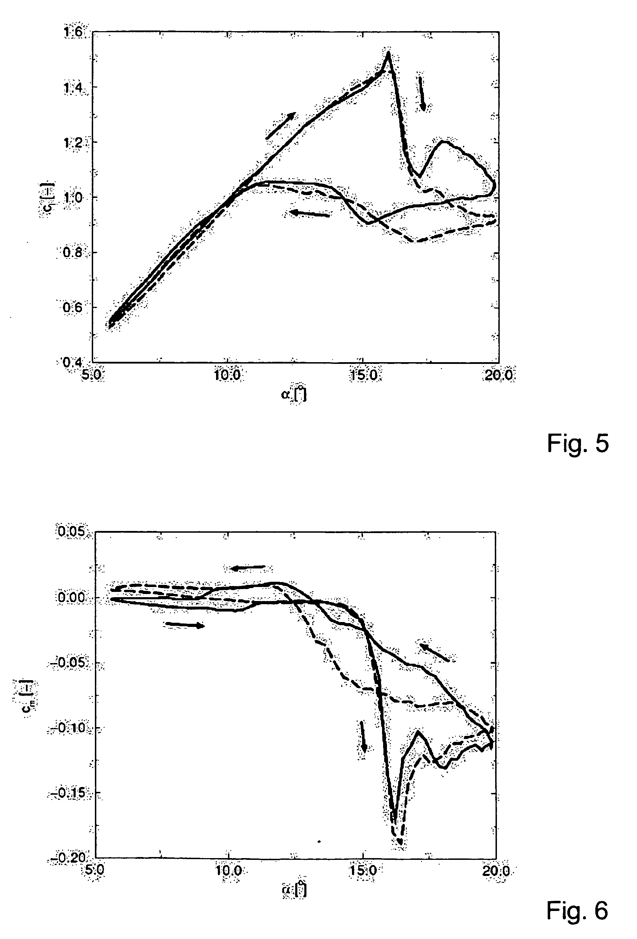

**Fig. 5** vergleicht bei identischen Anströmbedingungen den Verlauf des momentanen Auftriebsbeiwerts der Auftriebsfläche 1 (durchgezogene Linie) mit einer ansonsten identischen Auftriebsfläche ohne Wirbelgeneratoren 3 (gestrichelte Linie). Die Hystereseschleife des hier über dem momentanen Anstellwinkel für Anströmbedingungen in einem Deep-Stall-Fall aufgetragenen momentanen Auftriebsbeiwerts, die sich zwischen ansteigendem und wieder abfallendem Anstellwinkel öffnet, wird durch die Wirbelgeneratoren so verändert, dass im Mittel ein signifikanter Auftriebsgewinn erzielt wird.

**Fig. 6** vergleicht wieder die Auftriebsfläche 1 (durchgezogene Linie) bei identischen Anströmbedingungen mit einer entsprechenden Auftriebsfläche ohne Wirbelgeneratoren (gestrichelte Linie). Hier ist der momentane Nickmomentenbeiwert über dem momentanen Anstellwinkel für denselben Deep-Stall-Fall aufgetragen, wie er Fig. 5 zugrunde liegt. Die Hystereseschleife wird durch die Wirbelgeneratoren zum einen so verändert, dass der negative Spitzenwert des Nickmoments verringert wird. Zum anderen wird die unerwünschte Destabilisierung des aeroelastischen Systems aus der Auftriebsfläche und seiner Umströmung bei mittleren momentanen Auftriebsbeiwerten (vgl. Fig. 5) signifikant verringert.

### BEZUGSZEICHENLISTE

- 1: Auftriebsfläche
- 2: Profilvorderkante
- 3: Wirbelgenerator
- 4: Anstellwinkel
- 5: Anströmung
- 6: Staupunkt
- 7: Grenzschicht
- 8: Strömung
- 9: Saugseite
- 10: Höhe
- 11: Sehnenlänge
- 12: Mittelebene

## Patentansprüche

1. Auftriebsfläche (1) mit sich dynamisch änderndem Anstellwinkel (4) zu einer Anströmung (5), insbesondere Drehflügel, und mit Vorrichtungen im Bereich einer Profilvorderkante (2) der Auftriebsfläche (1), um ihr Ablöseverhalten bei erhöhtem Anstellwinkel (4) zu verbessern, wobei die Vorrichtungen mindestens einen passiven Wirbelgenerator (3) umfassen, der fest angebracht ist und sich bei einem niedrigen Anstellwinkel (4) am oder nahe dem Staupunkt der Auftriebsfläche befindet und der bei höheren Anstellwinkeln (4) als Wirbelgenerator zur Erzeugung lokaler Längswirbel in Funktion tritt, wobei der passive Wirbelgenerator (3) bei dem niedrigen Anstellwinkel (4) als Wirbelgenerator zur Erzeugung lokaler Längswirbel funktionslos ist und mit zunehmendem Anstellwinkel (4) aus einer Grenzschicht (7) einer beschleunigten Strömung (8) auf der Saugseite (9) der Auftriebsfläche heraustritt und wobei die Vorrichtungen eine Vielzahl von passiven Wirbelgeneratoren (3) aufweisen, die längs der Profilvorderkante (2) der Auftriebsfläche (1) so dicht angeordnet sind, dass die von ihnen erzeugten lokalen Längswirbel die Strömung auf der Saugseite der Auftriebsfläche über weite spannweitige Bereiche erfassen.

2. Auftriebsfläche nach Anspruch 1, **dadurch gekennzeichnet, dass** die Vorrichtungen passive Wirbelgeneratoren (3) aufweisen, die zylinder-, halbkugel-, prismen-, kegel-, quader- oder kalottenförmig sind.

3. Auftriebsfläche nach einem der Ansprüche 1 bis 2, **dadurch gekennzeichnet, dass** die Vorrichtungen passive Wirbelgeneratoren (3) aufweisen, die eine Höhe (4) zwischen 0,1 % und 5% einer lokalen Sehnenlänge der Auftriebsfläche (1) aufweisen.

4. Auftriebsfläche nach einem der Ansprüche 1 bis 3, **dadurch gekennzeichnet, dass** die Vorrichtungen passive Wirbelgeneratoren (3) aufweisen, die bei einem Anstellwinkel (4) der Auftriebsfläche (1) von bis zu 10° funktionslos sind.

5. Auftriebsfläche nach einem der Ansprüche 1 bis 4, **dadurch gekennzeichnet dass** die Vorrichtungen passive Wirbelgeneratoren (3) aufweisen, die im Bereich von 0% bis 10% einer lokalen Sehnenlänge (11) der Auftriebsfläche von der Profilvorderkante angeordnet sind.

6. Auftriebsfläche nach einem der Ansprüche 1 bis 5, **dadurch gekennzeichnet, dass** ein Profil der Auftriebsfläche (1) superkritisch ist.

7. Drehflügler mit mindestens einer umlaufenden Auftriebsfläche nach einem der Ansprüche 1 bis 6.

8. Schiffsstabilisator mit einer Auftriebsfläche nach einem der Ansprüche 1 bis 6 als aktiv angesteuerte Stabilisierungsflosse.

9. Windkraftanlage, mit einer Auftriebsfläche nach einem der Ansprüche 1 bis 6 als Rotorblatt mit veränderlichem Anstellwinkel.

## Claims

1. Lifting surface (1) with a dynamically varying pitch (4) with regard to an incident flow (5), particularly rotary wing, and having devices in the area of a profile front edge (2) of the lifting surface (1) for enhancing its separation behaviour at increased pitch (4), wherein the devices include at least one passive vortex generator (3) which is fixed and, at a low pitch (4), is at or close to the stagnation point of the lifting surface, and which, at higher pitches (4), starts to function as a vortex generator for producing local longitudinal vortices, wherein the passive vortex generator (3), at the low pitch (4), is out of function as a vortex generator for producing local longitudinal vortices, and emerges out of a boundary layer (7) of an accelerated flow (8) at the suction side (9) of the lifting surface with increasing pitch (4), and wherein the devices comprise a plurality of passive vortex generators (3) which are arranged along the profile front edge (2) of the lifting surface (1) at such a density that the local longitudinal vortices produced by them engage the flow at the suction side of the lifting surface over wide wing-span areas.

2. Lifting surface according to claim 1, **characterized in that** the devices comprise passive vortex generators (3) which have the shape of cylinders, semi-spheres, prisms, cones, cuboids, or calottes.

3. Lifting surface according to any of the claims 1 to 2, **characterized in that** the devices comprise passive vortex generators (3) which have a height (4) between 0.1 % and 5 % of a local chord length of the lifting surface (1).

4. Lifting surface according to any of the claims 1 to 3, **characterized in that** the devices comprise passive vortex generators (3) which are out of function at a pitch (4) of the lifting surface (1) of up to 10°.

5. Lifting surface according to any of the claims 1 to 4, **characterized in that** the devices comprise passive vortex generators (3) which are arranged in an area at a distance of 0 % to 10 % of a local chord length (11) of the lifting surface to the profile front edge.

6. Lifting surface according to any of the claims 1 to 5, **characterized in that** a profile of the lifting surface (1) is supercritical.

7. Rotary wing aircraft comprising at least on rotary lifting surface according to any of the claims 1 to 6.

8. Ship stabilizer comprising a lifting surface according to any of the claims 1 to 6 as an actively operated stabilizer fin.

9. Wind power plant comprising a lifting surface according to any of the claims 1 to 6 as a rotor blade with a variable pitch.

## Revendications

1. Surface portante (1) dont l'incidence (4) varie dynamiquement en direction d'un flux (5), notamment aile tournante, et avec des dispositifs dans la zone d'un bord d'attaque (2) du profil de la surface portante (1) pour améliorer son comportement au décollement en cas d'incidence (4) élevée, les dispositifs comportant au moins un générateur de tourbillons (3) passif qui y est fixé et qui, pour une faible incidence (4), se trouve sur le ou près du point d'accumulation de la surface portante et pour une incidence (4) plus élevée entre en jeu comme générateur de tourbillons (3) afin de générer localement des tourbillons longitudinaux, le générateur de tourbillons (3) passif étant inactif comme générateur de tourbillons pour générer localement des tourbillons longitudinaux dans le cas d'une faible incidence et sortant de la couche limite (7) d'un écoulement (8) accéléré sur l'extrados (9) pour une incidence (4) croissante et les dispositifs présentant une pluralité de générateurs de tourbillons (3) passifs qui sont disposé si près les uns des autres le long du bord d'attaque (2) du profil de la surface portante (1) que les tourbillons longitudinaux locaux générés par eux saisissent l'écoulement sur l'extrados de la surface portante dans de larges zones sur l'envergure.

2. Surface portante selon la revendication 1, **caractérisée en ce que** les dispositifs présentent des générateurs de tourbillons (3) passifs qui ont la forme de cylindres, de demi-sphères, de prismes, de cônes, de cadres ou de calottes.

3. Surface portante selon l'une des revendications 1 et 2, **caractérisée en ce que** les dispositifs présentent des générateurs de tourbillons (3) passifs ayant une hauteur (4) située entre 0,1% et 5% de la longueur de corde locale de la surface portante (1).

4. Surface portante selon l'une des revendications 1 à 3, **caractérisée en ce que** les dispositifs présentent des générateurs de tourbillons (3) passifs qui sont inactifs jusqu'à 10° d'incidence (4) de la surface portante (1).

5. Surface portante selon l'une des revendications 1 à 4, **caractérisée en ce que** les dispositifs présentent des générateurs de tourbillons (3) passifs qui sont disposés dans la plage 0% à 10% d'une longueur de corde locale (11) de la surface portante (1) du bord d'attaque du profil.

6. Surface portante selon l'une des revendications 1 à 4, **caractérisée en ce que** le profil de la surface portante est supercritique.

7. Aile tournante avec au moins une surface portante qui tourne selon l'une des revendications 1 à 6.

8. Stabilisateur de bateau comportant une surface portante selon l'une des revendications 1 à 6 comme aileron de stabilisation à commande active.

9. Eolienne comportant une surface portante selon l'une des revendications 1 à 6 comme pale de rotor à calage variable.
